(19) Europäisches Patentamt
European Patent Office
Office européen des brevets

(11) **EP 0 633 229 B1**

## (12) FASCICULE DE BREVET EUROPEEN

(45) Date de publication et mention
de la délivrance du brevet:
**20.05.1998 Bulletin 1998/21**

(21) Numéro de dépôt: **94401486.9**

(22) Date de dépôt: **30.06.1994**

(51) Int. Cl.⁶: **C03B 37/012**, C03B 19/01,
C03B 17/04, G01D 5/26,
G02B 6/16, G02B 6/22,
H01S 3/03

(54) **Procédé de fabrication d'une pièce cylindrique sous forme de tube et/ou de barreau constituée d'un verre multicomposants**

Verfahren zum Herstellen eines zylindrischen Körpers aus Multikomponentenglas in Form eines Rohres und/oder eines Stabes

Process for producing a cylindrical product in the form of a tube and/or rod of multi-component glass

(84) Etats contractants désignés:
**DE DK FR GB IT NL SE**

(30) Priorité: **06.07.1993 FR 9308283**

(43) Date de publication de la demande:
**11.01.1995 Bulletin 1995/02**

(73) Titulaire:
**ALCATEL ALSTHOM COMPAGNIE GENERALE D'ELECTRICITE**
**75008 Paris (FR)**

(72) Inventeur: **Baniel, Pascal**
**F-91210 Draveil (FR)**

(74) Mandataire: **Buffière, Michelle**
**c/o ALCATEL ALSTHOM,**
**Département de Propriété Industrielle,**
**30, avenue Kléber**
**75116 Paris (FR)**

(56) Documents cités:
**EP-A- 0 109 131         EP-A- 0 406 796**
**EP-A- 0 560 638         GB-A- 1 448 080**
**US-A- 3 966 446         US-A- 4 212 660**

- **PATENT ABSTRACTS OF JAPAN vol. 1 no. 155 (E-73) ,12 Décembre 1977 & JP-A-52 096552 (NEC CORP.) 13 Août 1977,**
- **PATENT ABSTRACTS OF JAPAN vol. 5 no. 31 (C-45) ,25 Février 1981 & JP-A-55 158146 (FUJITSU CO. LTD.) 9 Décembre 1980,**

## Description

La présente invention concerne un procédé pour la fabrication du barreau de coeur et du ou des tubes de gaines constituant une préforme pour fibre optique plus particulièrement constituée d'un verre dit multicomposants c'est-à-dire obtenu à partir d'une pluralité de constituants comme par exemple les verres fluorés de type ZBLAN ou les verres d'oxydes à base de silice ainsi qu'une fibre optique obtenue par étirage à partir de cette préforme.

La présente invention concerne également des fibres optiques obtenues par étirage d'une préforme fabriquée par le procédé selon l'invention, ainsi que l'utilisation de ces fibres optiques.

L'invention appartient notamment au domaine des lignes optiques de communications ou de détection dans lesquelles un signal lumineux de communication ou de détection est transmis par une ou plusieurs fibres optiques connectées les unes aux autres. Il arrive souvent que des fibres optiques (dites spécifiques) ayant un rôle particulier soient insérées le long d'une ligne de transmission ou de détection constituée de fibres optiques classiques (dites normales car elles ont pour fonction principale de transmettre les signaux lumineux), ou bien encore raccordées à l'une des extrémités d'une telle ligne.

Les fibres optiques spécifiques peuvent avoir plusieurs rôles :

-  elles peuvent servir de capteurs, notamment lorsque la ligne optique correspondante est une ligne de détection,
-  elles peuvent servir d'amplificateurs optiques, d'isolateurs optiques, de circulateurs optiques, etc..., insérés le long d'une ligne de communications,
-  dans le cas du raccordement de deux lignes de communication ayant des diamètres de coeurs différents, elles peuvent servir à effectuer l'adaptation de ces diamètres de coeurs l'un à l'autre,
-  elles peuvent servir à accroître la puissance lumineuse injectée dans une ligne de communication ou dans une ligne de détection.

Le brevet US-3 966 446 décrit un procédé permettant de réaliser une préforme pour fibre optique dont l'indice de réfraction varie longitudinalement, une telle fibre servant par exemple à réduire la dispersion de mode lors de la transmission de signaux optiques. Le procédé decrit consiste à déposer une suie de verre de composition variable au cours du temps, par exemple par ajout de dopants servant à modifier l'indice de réfraction, selon une direction qui est celle de l'axe de la préforme.

Ce procédé connu ne permet pas d'obtenir des fibres de qualité requise lorsque leur verre de base est un verre multicomposants.

La demande de brevet EP-0 406 796 décrit un procédé de fabrication d'un barreau de verre consistant à distribuer en continu une poudre constituée d'un mélange de produits halogénés directement sur un support coulissant dans une cavité cylindrique en maintenant entre la pièce en formation et la paroi de cette cavité une couche de gaz, et l'on chauffe la partie supérieure de la pièce en formation. Ce procédé ne permet pas de fabriquer de manière satisfaisante une préforme pour fibre optique à propriétés longitudinalement variables.

Le but de la présente invention est de mettre au point un procédé permettant la fabrication d'une préforme pour fibre optique à propriétés optiques longitudinalement variables et constituée d'un verre multicomposants.

La présente invention propose à cet effet un procédé de fabrication d'une pièce cylindrique sous forme de tube et/ou de barreau constituée d'un verre multicomposants, ce procédé comportant les opérations suivantes :

-  l'on met en oeuvre une cavité cylindrique verticale tapissée de membranes poreuse, dont les dimensions internes sont supérieures de quelques dizaines de microns à celles de ladite pièce, et dans laquelle est susceptible de coulisser un piédestal cylindrique constituant un support pour ladite pièce,
-  on prévoit sur ledit piédestal une souche originelle constituée dudit verre,
-  on chauffe ladite souche jusqu'à la fusion et on injecte un gaz en permanence dans lesdites membranes poreuses pour maintenir entre elles et ladite souche en fusion une couche de gaz de quelques dizaines de microns d'épaisseur évitant ainsi tout contact,
-  on alimente ladite souche à l'état fondu par le haut de ladite cavité par une distribution continue d'une poudre des constituants dudit verre dont on fait varier la composition au fur et à mesure de la formation de ladite pièce cylindrique, de sorte que ledit verre constituant ladite pièce cylindrique a une composition longitudinalement variable,
-  on descend ledit piédestal au fur et à mesure de la formation de ladite pièce cylindrique à partir de ladite souche.

Par exemple, on fait varier la composition de la poudre de constituants du verre par ajout d'un ou de plusieurs constituants à une poudre de constituants de base à des instants prédéterminés pendant le déroulement du procédé.

La poudre de constituants du verre est amenée par des moyens d'amenée ayant une forme hélicoïdale ou une direction rectiligne, et orientés vers le haut de la cavité.

En outre, de manière très avantageuse :

-  le piédestal a lui-même la forme d'un corps cylindrique creux fermé à sa partie inférieure par un piston,

- le piédestal contient initialement une charge solide en verre destinée à former la souche originelle,
- on extrait progressivement du piédestal la souche à l'état fondu en poussant le piston vers le haut.

Ce procédé permet avantageusement de préparer en continu une pièce cylindrique en un verre multicomposants de très haute pureté en utilisant une alimentation continue de poudres dont il est possible de faire varier la composition au fur et à mesure par ajout ou retrait d'un ou de plusieurs composants de manière à obtenir le profil de composition recherché le long de la pièce fabriquée. En outre, les pièces cylindriques obtenues par ce procédé sont parfaitement calibrées et dotées de très bonnes propriétés optiques de surface et de volume.

Par ailleurs, ce procédé assure une très bonne homogénéité du bain obtenu par fusion de la souche originelle. Les constituants ajoutés sont ainsi très bien répartis, même s'ils sont présents en faibles quantités.

La présente invention concerne également une fibre optique multimode obtenue par étirage d'une préforme constituée d'un barreau de coeur entouré d'au moins un tube de gaine obtenus par le procédé selon l'invention, et comportant un coeur entouré d'au moins une gaine optique, ledit coeur et ladite gaine étant de composition variable longitudinalement le long de ladite fibre et présentant des zones dites normales, au sein desquelles les compositions dudit verre de coeur et dudit verre de gaine sont appelées compositions de base, et des zones dites spécifiques au sein desquelles la composition dudit verre de coeur et/ou la composition dudit verre de gaine est différente de la ou desdites compositions de base, l'ouverture numérique desdites zones spécifiques étant supérieure à l'ouverture numérique desdites zones normales, **caractérisée en ce qu'**elle comporte au moins une zone spécifique située à l'une de ses extrémités servant d'extrémité d'entrée d'un signal lumineux, ladite zone spécifique étant destinée à assurer une réfraction dans ladite gaine de la plupart des modes d'ordre élevé.

La présente invention concerne également des fibres optiques selon les revendications indépendantes 17, 19 et 21 , obtenues par étirage d'une préforme fabriquée par le procédé selon l'invention, ainsi que les utilisations de ces fibres optiques comme définies dans les revendications indépendantes 22 à 28.

D'autres caractéristiques et avantages de la présente invention apparaîtront dans la description suivante d'un procédé selon l'invention pour la réalisation d'un barreau et d'un tube destinés à constituer une préforme pour fibre optique, ainsi que dans les exemples d'application de plusieurs fibres obtenues à partir de préformes selon l'invention. La description et les exemples suivants sont bien entendu donnés à titre illustratif et nullement limitatif.

Dans les figures suivantes :

- les figures 1 à 5 montrent schématiquement un exemple de dispositif mettant en oeuvre le procédé selon l'invention pour la fabrication d'un tube en verre de composition longitudinalement variable,
- la figure 6 montre la répartition de la température dans un tube en formation,
- la figure 7 montre schématiquement un exemple de dispositif mettant en oeuvre le procédé selon l'invention pour la fabrication d'un barreau en verre de composition longitudinalement variable,
- la figure 8 montre schématiquement en coupe longitudinale une première fibre optique obtenue à partir d'une préforme selon l'invention,
- la figure 9 montre schématiquement en coupe longitudinale une seconde fibre optique obtenue à partir d'une préforme selon l'invention,
- la figure 10 montre schématiquement en coupe une troisième fibre optique obtenue à partir d'une préforme selon l'invention.
- la figure 11 représente schématiquement un dispositif d'alimentation en poudre possible pour le dispositif des figures 1 à 5 ou 7.

Dans toutes ces figures, les éléments communs portent les mêmes numéros de référence.

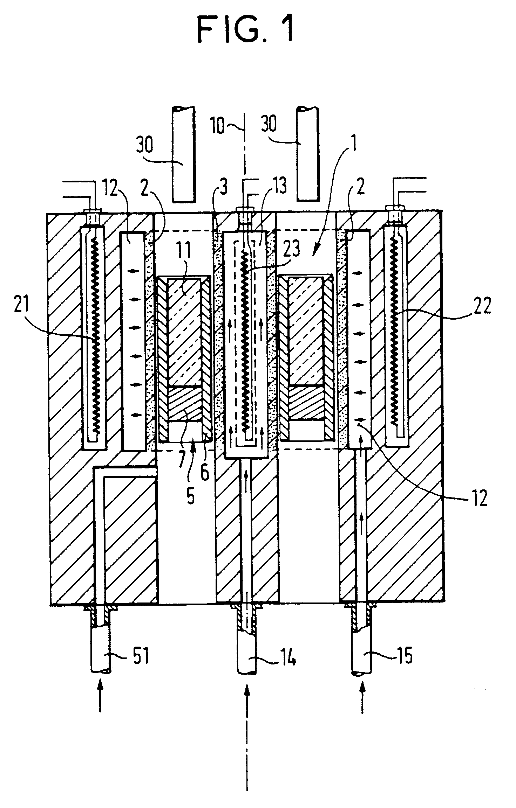

En relation avec les figures 1 à 7, on décrit un procédé de fabrication d'une préforme selon l'invention à partir d'un barreau de coeur et d'un tube de gaine.

On décrira en premier lieu l'élaboration du tube de gaine constitué par exemple d'un verre multicomposants fluoré de type ZBLAN, c'est-à-dire comprenant les constituants suivants : $ZrF_4$, $BaF_2$, $LaF_3$, $AlF_3$, NaF.

La longueur de ce tube est par exemple de 10 cm, son diamètre intérieur de 15 mm et son diamètre extérieur de 30 mm.

Dans les figures 1 à 5 apparaît schématiquement un dispositif comprenant une cavité tubulaire verticale 1 de révolution autour d'un axe 10 et tapissée sur une partie de sa hauteur par deux membranes poreuses coaxiales 2 et 3 réalisées en graphite dont la perméabilité de DARCY est de l'ordre de $10^{-15}$ $m^2$, éventuellement recouvert d'une couche mince (de 0,1 $\mu$m d'épaisseur par exemple) de pyrocarbone élaborée à haute température par exemple par pyrolyse de méthane. Le pyrocarbone permet d'éviter la dégradation des membranes 2 et 3 malgré une ambiance très corrosive due à la présence des composés fluorés contenus dans le verre de type ZBLAN.

Le diamètre intérieur de la membrane 2 est de 30,05 mm et le diamètre extérieur de la membrane 3 de 14,95 mm (avec une tolérance sur chaque diamètre de 0,01 mm). De préférence les deux membranes ont même épaisseur, égale à 2 mm.

La partie inférieure de la cavité tubulaire 1 non recouverte des membranes 2 et 3 présente les mêmes dimensions que ces membranes, avec les mêmes tolérances.

Pour leur alimentation en flux gazeux, les membranes 2 et 3 sont associées respectivement à deux corps creux coaxiaux 12 et 13 avec des arrivées de gaz 14 et 15 sous des pressions respectives $P_1$ et $P_2$.

Des cartouches de chauffage 21, 22, 23 réglables en hauteur sont prévues à l'intérieur et à l'extérieur de la cavité tubulaire 1.

Un piédestal annulaire 5, également de révolution autour de l'axe 10, est susceptible de coulisser dans la cavité 1. Il est formé d'un corps creux cylindrique et annulaire 6 fermé à sa partie inférieure par un piston 7 également annulaire. Toutes les surfaces internes du piédestal 5 destinées à venir en contact avec les composés fluorés sont éventuellement recouvertes d'une couche mince de pyrocarbone.

Des moyens (non illustrés) sont prévus pour pousser le piston 7 vers le haut, et l'ensemble du piédestal 5 vers le bas.

Enfin, on a indiqué schématiquement par la référence 30 des moyens pour distribuer en continu au niveau de la partie supérieure de la cavité tubulaire 1 une poudre des constituants du verre des différentes zones (spécifiques et normales) de la pièce à réaliser. Un système de régulation du débit de poudre (non illustré), bien connu de l'homme de l'art, peut en outre être prévu.

Avantageusement, l'ensemble du dispositif qui vient d'être décrit est installé dans une enceinte (non représentée) étanche à l'atmosphère, dans laquelle est introduit un gaz neutre tel que l'argon ou l'hélium. Le gaz constituant l'atmosphère de l'enceinte sert par exemple également au confinement de la pièce cylindrique en formation.

Au début du procédé d'élaboration du tube souhaité, on introduit dans le piédestal 5, à la température ambiante, une charge 11 en verre solide (souche originelle) ayant la composition du verre de type ZBLAN souhaité (voir figure 1). Le piédestal 5 est lui-même installé entre les membranes poreuses 2 et 3.

Le procédé selon l'invention se déroule de la manière suivante.

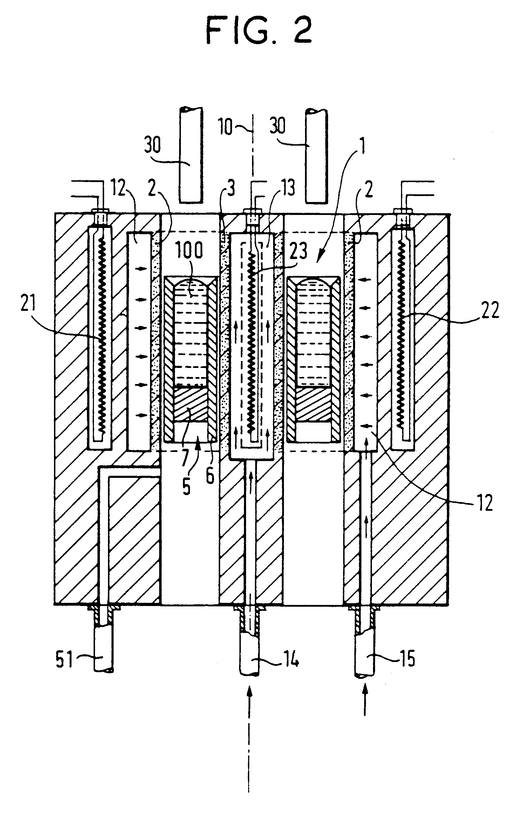

Grâce aux résistances chauffantes 21 à 23, la charge en verre 11 est fondue à l'intérieur du piédestal 5 à une température de l'ordre de 650°C à 700°C ; elle est référencée 100 dans la figure 2.

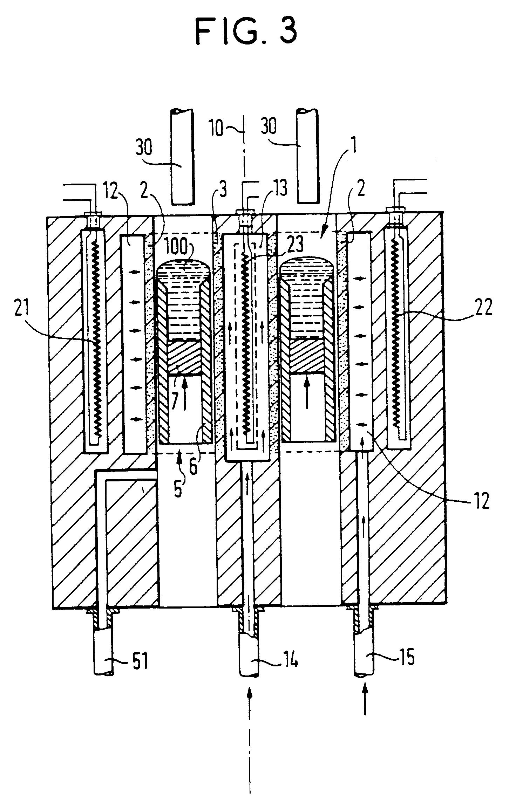

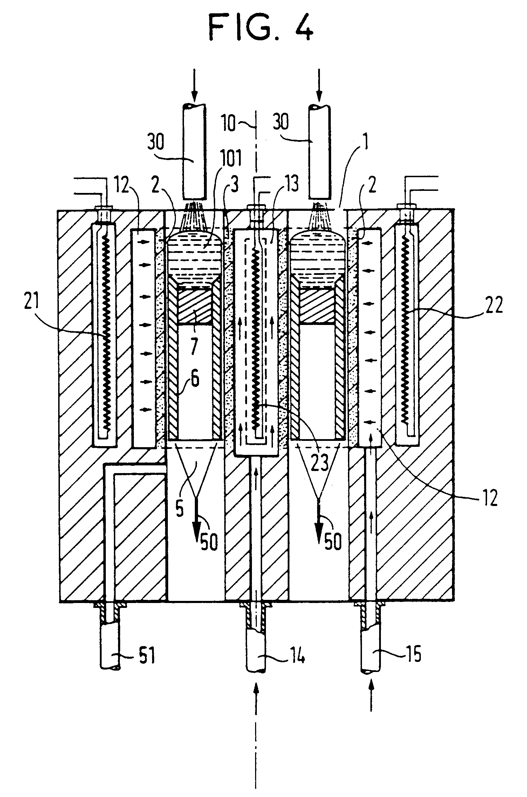

On pousse alors vers le haut le piston 7 dans le piédestal 5 de manière à réaliser, à partir de la charge fondue 100 (voir figure 3), une souche en fusion 101 au sommet du piédestal 5 (voir figure 4).

Simultanément, on ajuste les pressions $P_1$ et $P_2$ à 0,1 bar au dessus de la pression atmosphérique pour réaliser une couche de gaz de quelques dizaines de microns d'épaisseur entre les membranes 2 et 3 et la souche en fusion 101 ; une couche de gaz est également maintenue entre ces membranes et la face externe du piédestal 5. La couche de gaz assure un confinement de la souche en fusion 101 et évite son contact avec la cavité 1.

Toujours de manière simultanée, on alimente la souche 101 en poudre de constituants du verre, à partir des moyens de distribution 30 (voir figure 4), et l'on descend le piédestal 5 (voir flèches 50), par exemple à la vitesse de 0,5 mm/min.

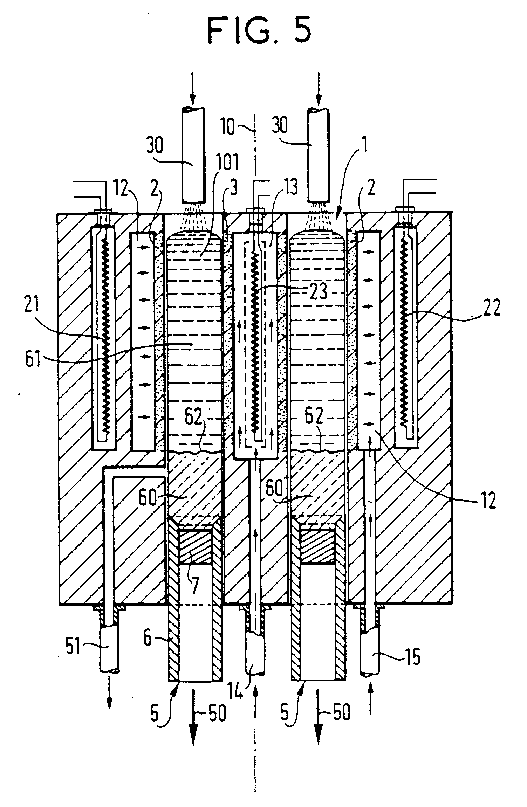

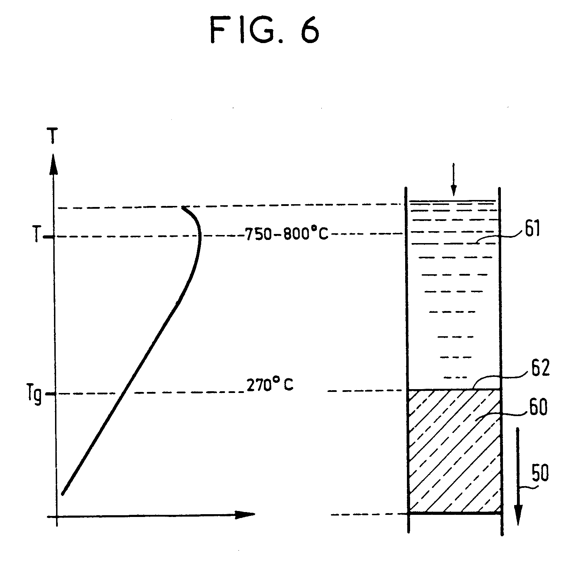

Après amorçage du processus, "l'état stationnaire" est illustré dans la figure 5. Le profil de température le long de la cavité tubulaire est schématisé dans la figure 6.

Il apparaît une portion de tube solide 60 surmontée d'une colonne de verre fondu 61. L'interface 62 correspondant à la température de transition vitreuse Tg du verre (entre +260 et +270°C) se situe sensiblement à la base inférieure des membranes 2 et 3.

Dans la colonne liquide 61, une zone très proche de la surface supérieure est portée à une température très élevée de l'ordre de 750°C à 800°C pour affiner le verre, c'est-à-dire éliminer toutes les microbulles qui auraient tendance à se former. Cette zone de chauffage est limitée à quelques millimètres pour assurer l'affinage sans risquer une décomposition trop importante de certains composés fluorés (voir figure 6).

Le gradient de température dans le tube solide 60 est par exemple de 100°C/cm. Ce gradient peut être éventuellement maîtrisé par l'adjonction de systèmes de refroidissement (non illustrés).

Un capteur de pression schématisé en 51 et situé au voisinage de l'interface 62 est destiné à permettre la régulation des deux pressions $P_1$ et $P_2$ pour ajuster le champ de pression dans le film de gaz de sorte que la hauteur de la colonne de verre fondu 61 reste constante pendant tout le tirage.

Bien entendu, l'alimentation en continu en poudre par les moyens de distribution 30 est compatible avec la vitesse de défilement. Un détecteur de position de la surface supérieure de la colonne de verre fondu 61 peut être utilisé à cette fin.

Le déplacement vertical du tube peut être réalisé par des systèmes mécaniques de translation connus, tel que le système MFL-133-6 de la société HUNTINGTON. L'ensemble des opérations peut être piloté par un micro-ordinateur permettant de contrôler les pressions, la vitesse de défilement du tube et d'effectuer la régulation du débit de poudre.

Toujours selon l'invention, on fait varier la composition de la poudre distribuée par les moyens 30, par exemple par addition à la poudre initiale de verre de type ZBLAN de certains constituants adaptés à des instants prédéterminés pendant le procédé d'élaboration du tube. Pour cela, on peut prévoir par exemple plusieurs distributeurs de poudre, l'un contenant la poudre de verre de type ZBLAN de base, et les autres contenant différents constituants à rajouter à ce verre de base pour obtenir les variations longitudinales désirées de composition.

La proportion nécessaire des constituants ajoutés dans le verre multicomposants de base pour obtenir les propriétés particulières souhaitées est en général faible. Il n'est donc pas indispensable d'effectuer au préalable un mélange des constituants contenus dans les différents distributeurs, la simple amenée des poudres dans un même conduit d'alimentation étant suffisante. On peut toutefois prévoir un conduit d'amenée hélicoïdal par exemple, de sorte que les différents poudres parcourent ensemble une plus grande distance avant de rejoindre la souche en fusion 101. On assurera ainsi un bon mélange lorsque cela est requis.

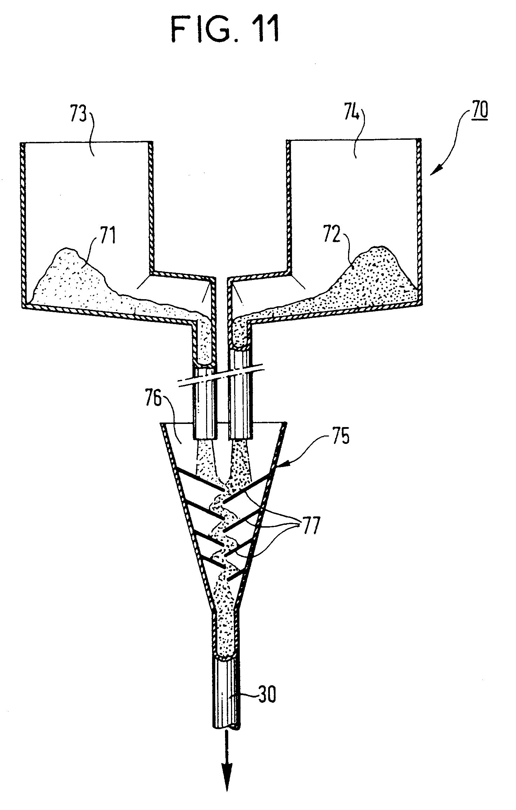

On a représenté en figure 11 un exemple de dispositif d'alimentation pouvant être utilisé avec le dispositif des figures 1 à 5 ou 7.

La figure 11 représente de manière schématique un dispositif d'alimentation en poudres 70 à partir de deux mélanges 71 et 72 de compositions différentes. Le dispositif 70 comporte deux récipients 73 et 74 contenant respectivement les mélanges distincts 71 et 72, un mélangeur 75 et l'un des moyens de distribution 30.

Dans le cas de variations de compositions nécessitant seulement l'ajout d'un ou de plusieurs constituants (mélange 72 par exemple) par rapport à la composition nominale de base (mélange 71 par exemple), l'alimentation est effectuée simultanément en contrôlant de manière séparée les débits respectifs des mélanges 71 et 72, afin d'obtenir in fine la stoechiométrie désirée. Pour parfaire l'homogénéité du mélange final avant dépôt au sommet de la souche en fusion, de manière à assurer une fusion rapide et homogène des espèces ajoutées, on utilise avantageusement le mélangeur 75 : celui-ci peut être constitué simplement d'un entonnoir 76 équipé de chicanes 77 en forme de demi-disques ou d'hélices.

Dans le cas de variations de compositions plus complexes ne pouvant être réalisées simplement par l'ajout d'un second mélange tel que le mélange 72, on réalise dans un premier temps l'alimentation à partir du mélange 71, puis dans un deuxième temps l'alimentation à partir du mélange 72 de manière à obtenir les variations d'indice ou de composition souhaitées. Dans ce cas, l'utilisation du mélangeur 75 n'est pas nécessaire si les mélanges ont été préalablement préparés de manière homogène.

Etant donné que le tube en formation se déplace longitudinalement pendant son élaboration, les variations de la composition de la poudre distribuée par les moyens 30 entraînent des variations longitudinales dans la composition du tube.

On va maintenant décrire l'élaboration du barreau de coeur d'une préforme de fibre optique selon l'invention, également constitué d'un verre fluoré multicomposants de type ZBLAN de composition identique ou différente de celle du verre constituant le tube précédent.

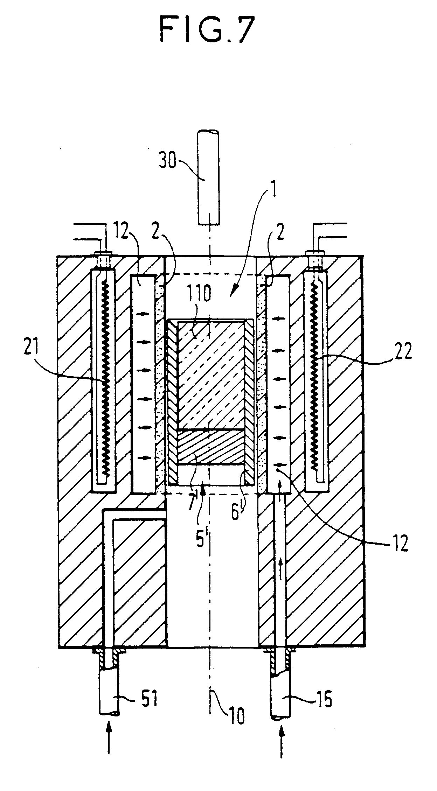

On utilise un dispositif du même type que celui décrit en relation avec les figures 1 à 5, mais adapté pour la fabrication d'un barreau. A cet effet, la cavité 1 est cylindrique, creuse et non tubulaire, comme représenté en figure 7. La membrane poreuse 3, le corps creux 13, la cartouche de chauffage 23 et l'arrivée de gaz 14 sont donc supprimés.

Ce dispositif comporte une membrane poreuse 2 de diamètre intérieur égal à 15,095 mm et de hauteur utile environ égale à 80 mm, usinée dans un graphite de perméabilité de Darcy égale à $2,7.10^{-15}$ m$^2$ par exemple. Le piédestal 5' associé est formé d'un corps creux cylindrique 6', a une hauteur environ égale à 50 mm et un diamètre extérieur de 15,059 mm, ce qui correspond à un jeu radial de 18 $\mu$m, à la température ambiante, entre la membrane 2 et le piédestal 5'. Le piston 7' fermant le piédestal 5' et ayant la forme d'un disque de diamètre extérieur égal à 9,95 mm est mobile à l'intérieur de la cavité intérieure du corps 6' du piédestal 5', le diamètre de cette cavité étant de 10 mm. Le piédestal 5' et le piston 7' sont éventuellement recouverts sur toutes leurs faces d'une fine couche de pyrocarbone permettant d'améliorer les propriétés (caractère inerte, anti-adhésion) des supports vis-à-vis du verre fluoré.

Une souche originelle (charge) 110 de verre fluoré solide de diamètre légèrement inférieur à celui de la cavité intérieure du piédestal 5', et de hauteur égale à 27 mm, repose sur le piston 7'. L'ensemble piédestal 5'-piston 7'-souche solide 110 se trouve, à température ambiante, entouré par la membrane poreuse 2.

Tous les autres éléments du dispositif adapté à l'élaboration d'un barreau sont identiques à ceux décrits en relation avec les figures 1 à 5 pour l'élaboration d'un tube.

L'ensemble du dispositif peut être installé dans une enceinte tubulaire étanche à l'atmosphère et permettant de travailler sous atmosphère contrôlée.

Pendant toute la durée de l'élaboration du barreau souhaité, l'enceinte est continûment balayée à un débit de 2 l/min par un mélange de gaz très pur. En ce qui concerne le gaz de confinement traversant la membrane poreuse, sa pression est régulée pendant toute la durée de l'expérience à 120 mbars par rapport à la pression intérieure de l'enceinte (voisine de la pression atmosphérique). Le gaz de confinement est par exemple du même type que celui utilisé pour le balayage de l'enceinte (il peut s'agir, par exemple, d'argon contenant 5% d'hexafluorure de soufre SF$_6$ en volume).

Toutes les dispositions particulières qui viennent d'être décrites peuvent s'appliquer de la même manière à l'élaboration d'un tube.

Le procédé selon l'invention pour l'élaboration du barreau désire comprend les opérations suivantes.

La souche originelle 110 est introduite dans le piédestal 5', lui-même entouré par la membrane poreuse 2.

Le débit total de gaz à travers la membrane poreuse est réglé à une valeur de l'ordre de 0,135 l/min à température ambiante.

Le système de chauffage (cartouches 21 et 22) est mis en route à une vitesse de chauffe de 100°C/min jusqu'à ce que la température, au niveau du verre, atteigne 710°C. Le verre constituant la souche originelle 110 se trouve alors à l'état fondu. Il est maintenu à la température de 710°C pendant environ 15 minutes de manière à atteindre l'équilibre thermique et à éliminer les éventuelles bulles de gaz provenant de l'interface verre-piédestal 5'. Le débit total du gaz de confinement à travers la membrane poreuse est alors égal à 0,06 l/min du fait de l'augmentation de la température et de l'augmentation de la viscosité du gaz en résultant.

On fait alors remonter le piston 7' dans la cavité 1 à une vitesse de 2 mm/min sur une hauteur totale de 27 mm. Le bain fluoré constitué du verre de souche fondu remonte donc lentement et est progressivement extrait du piédestal 5'. Il se trouve ainsi confiné entre les parois de la membrane poreuse 2, sans toucher cette dernière à aucun moment, sa hauteur confinée augmentant régulièrement. Le film de gaz est ainsi formé de manière régulière et reproductible. L'opération précédente est appelée opération d'injection du verre à l'état fondu.

Une fois l'injection terminée, la température du bain est augmentée jusqu'à 750°C pour l'affinage et maintenue à cette valeur pendant 15 minutes.

On alimente alors la souche confinée en poudre de constituants du verre, à partir des moyens de distribution 30, et simultanément, l'ensemble piédestal 5'-piston 7'-bain fluoré confiné est translaté vers le bas à une vitesse constante de 2 mm/min, en assurant toujours les mêmes conditions pour les différents débits gazeux ; le verre est continûment refroidi avec un gradient thermique moyen de -75°C/cm entre 620°C et 310°C, ce qui correspond à une vitesse de refroidissement de -15°C/min. Le refroidissement se termine à la vitesse de -7,5°C/min jusqu'à la température de transition vitreuse de 260°C avant que l'échantillon de verre solide ne passe la limite inférieure de la membrane poreuse 2. Pendant la translation du bain fluoré et son refroidissement, on n'observe aucun mouillage du verre sur la paroi, et les conditions de pression restent constantes au cours du temps.

Toujours selon l'invention et de même que lors de la réalisation du tube précédemment décrite, on fait varier la composition de la poudre distribuée par les moyens 30, par exemple par addition à la poudre initiale de verre de type ZBLAN de certains constituants adaptés.

Les conditions de fabrication d'un tube de verre sont sensiblement les mêmes que celles de fabrication d'un barreau. Les jeux piédestaux-membranes ont des valeurs similaires aussi bien pour la membrane extérieure que pour la membrane intérieure dans le cas du tube.

La préparation de la souche de verre par confinement gazeux permet d'établir sur quelques millimètres de hauteur un film de gaz confinant la charge et permettant de poursuivre l'élaboration par ajout de poudres en continu.

L'utilisation d'une souche originelle et éventuellement du "piédestal-injecteur" permet d'obtenir un film gazeux très régulier et ainsi de préparer de manière simple et reproductible aussi bien un tube qu'un barreau dont la pureté finale ne dépend que de la pureté initiale des produits de départ (poudres utilisées), des gaz réactifs et des graphites utilisés.

En outre, l'avantage de la technique de confinement par film de gaz réside dans le fait qu'aucune contamination supplémentaire ne provient de contacts du bain en fusion avec les parois pendant l'élaboration. L'absence de moules pour fabriquer un tube ou un barreau et donc de polissages mécaniques et/ou chimiques ultérieures des surfaces confinées ajoute encore à la qualité des pièces obtenues.

On peut ainsi fabriquer un barreau et un tube de verre de composition longitudinalement variable pour réaliser une préforme de fibre optique. Pour cela, on prépare un barreau de verre de coeur et un tube de verre de gaine comme décrit précédemment.

Les hauteurs du barreau et du tube peuvent être fixés à 10 cm (mais peuvent bien sûr être beaucoup plus importantes). Le barreau de verre de coeur a par exemple un diamètre extérieur moyen de 10,00 mm, et le tube de verre de gaine un diamètre intérieur de 10,05 mm et un diamètre extérieur de 20,00 mm. Ces dimensions précises sont obtenues par un choix adapté des dimensions des différentes pièces intervenant dans le procédé précédent (membranes poreuses, piédestaux, etc...).

Le barreau est ensuite introduit à l'intérieur du tube, par exemple selon une technique bien connue de l'homme de l'art sous le nom de "barreau dans tube" (rod-in-tube), de manière à former une préforme. L'ajustement du barreau et du tube est pratiquement parfait étant donné les dimensions aux tolérances très serrées de ceux-ci.

La préforme ainsi formée est transférée sur une tour de fibrage et réchauffée à une température adéquate, par exemple autour de 310°C, et la fibre étirée est homothétique de la préforme primitive. Dans l'exemple précédent, pour un diamètre total de la fibre de 125 μm, le coeur a un diamètre de l'ordre de 62,5 μm. La fibre ainsi décrite est donc multimode.

Pour préparer une fibre monomode à partir de la préforme précédente, on peut dans un premier temps préparer une grosse fibre intermédiaire de quelques millimètres de diamètre. Cette grosse fibre est ensuite introduite dans un autre tube de verre de gaine, préparé selon le procédé précédent ou par un autre procédé classique car la qualité du verre est moins importante pour l'interface entre les première et deuxième gaines.

Etant donné que le procédé décrit précédemment assure une très bonne homogénéité du bain fondu constitué par la souche en fusion, la poudre des constituants distribuée par les moyens 30 est très bien répartie, quelle que soit sa composition. Notamment, même si la concentration d'un constituant ajouté est très faible, sa répartition est homogène dans la pièce formée.

Les variations longitudinales ainsi obtenues de la composition du tube ou du barreau formé permettent d'obtenir des variations longitudinales des propriétés de guidage et de transmission optiques de la préforme réalisée.

Il est à noter toutefois que la longueur minimale de tube et/ou de barreau sur laquelle il est possible d'effectuer une variation de composition dépend :

- de la hauteur minimale de bain fondu nécessaire pour faire fondre la poudre ajoutée et homogénéiser le bain au niveau de la zone de contact avec la poudre en fusion,
- de la vitesse d'alimentation en poudre et donc de la vitesse de descente du piédestal et de la vitesse de refroidissement du bain.

En pratique, dans le cas d'un tube et d'un barreau réalisés en verre fluoré, des variations de composition de la préforme sur des longueurs de l'ordre de 25 mm au minimum peuvent être réalisées.

Si l'on réalise à l'aide de ce tube et de ce barreau une préforme pour fibre optique de la manière décrite précédemment, la fibre obtenue par étirage de la préforme comporte une ou plusieurs zones spécifiques ayant chacune une longueur de l'ordre de quelques centaines de mètres environ pour un diamètre de barreau de coeur de 10 mm et un diamètre de coeur de la fibre de 50 μm.

On va maintenant décrire à titre d'exemple plusieurs fibres obtenues par étirage de préformes selon l'invention, ainsi que certaines de leurs applications.

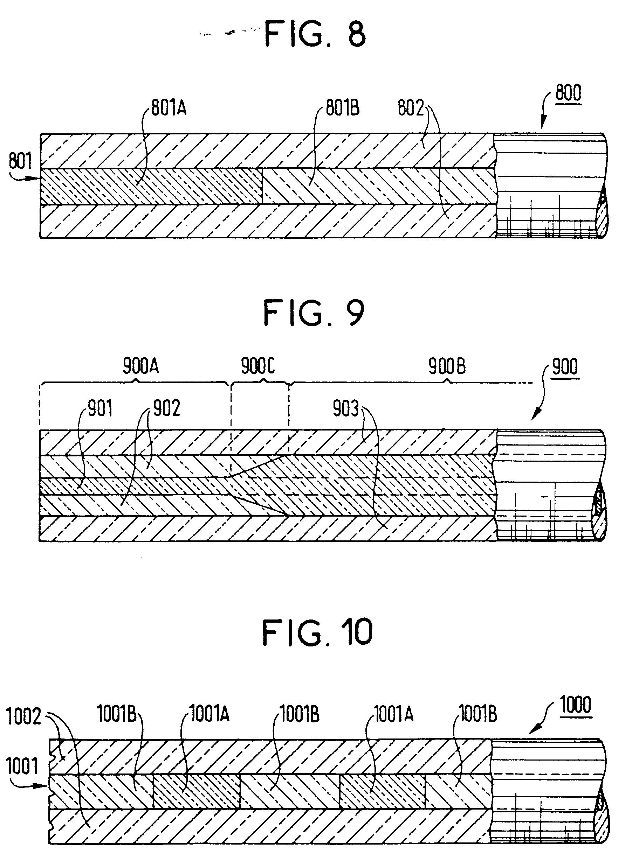

Les figures 8, 9 et 10 représentent schématiquement en coupe longitudinale des fibres optiques obtenues par étirage de préformes selon l'invention.

### Exemple 1

En figure 8 apparaît une portion de fibre optique multimode 800 dont le coeur est référencé 801 et la gaine optique 802. La gaine de protection plastique de la fibre n'a pas été représentée.

Le coeur 801 comporte au moins une zone spécifique 801A et une zone normale 801B (seules une zone spécifique et une zone normale sont visibles en figure 8). Plusieurs zones spécifiques 801A peuvent être disposées à des intervalles réguliers ou non le long de la fibre 800, ou se trouver aux extrémités de cette dernière. La composition du verre multicomposants constituant le coeur 801 est telle que l'indice de réfraction du verre dans la zone 801B est différent de l'indice de réfraction du verre dans la zone 801A, l'indice du coeur 801 dans les zones 801A et 801B restant toujours supérieur à l'indice de la gaine 802. Les variations d'indice sont obtenues par exemple en ajoutant au verre de base constituant les zones 801A un constituant dopant adapté à l'augmentation ou à la diminution d'indice.

La variation de l'indice du coeur 801 entre les zones 801A et 801B entraîne une variation de l'ouverture numérique de la zone spécifique 801A à la zone normale 801B.

On rappelle que l'ouverture numérique ON d'une fibre optique est définie par la formule :

$$ON = \sin\theta o = (n_c^2 - ng^2)^{1/2}$$

où :

- $\theta o$ est l'angle limite d'injection des rayons lumineux dans le coeur de la fibre à l'interface entre l'air et le verre de coeur pour que ces rayons soient propagés à l'intérieur du coeur par reflexion totale à l'interface entre le verre de coeur et le verre de gaine,
- $n_c$ est l'indice du verre de coeur,
- $n_g$ est l'indice du verre de gaine.

A l'angle $\theta o$ correspond un angle limite $\beta_{lim}$ à l'interface entre le verre de coeur et le verre de gaine : audessus de cet angle limite, les rayons sont guidés dans le coeur.

Les variations d'ouverture numérique peuvent être exploitées à profit lorsque l'ouverture numérique d'une fibre optique multimode ou la différence d'indice entre le coeur et la gaine optique d'une fibre monomode sont plus élevées en entrée de cette fibre que dans le reste de la fibre. Ceci permet d'une part d'injecter dans la fibre une plus grande puissance lumineuse, et d'autre part d'éjecter certains modes d'ordre élevé dans la gaine (une partie des modes d'ordre élevé est de toute manière éjectée volontairement immédiatement après son entrée dans la fibre optique). En effet, lorsque l'angle d'injection en entrée de la fibre des modes d'ordre élevé est tel que leur angle d'incidence à l'interface entre verre de coeur et verre de gaine est supérieur à l'angle limite associé à la zone spécifique disposée en entrée, et inférieur à l'angle limite associé à la zone normale, les modes d'ordre élevé ne sont plus guidés dans le coeur et sont réfractés dans la gaine lors du passage de la zone spécifique à la zone normale. Les modes d'ordre élevé réfractés dans la gaine donnent ainsi naissance à des modes dits de gaine.

Dans l'exemple représenté, on peut par exemple choisir l'indice de réfraction $n_{cA}$ du coeur 801 dans la zone 801A égal à 1,5, et l'indice de réfraction $n_{cB}$ du coeur 801 dans la zone 801B est égal à 1,49, alors que l'indice de réfraction $n_g$ du verre de la gaine 802 est de 1,48.

Les modes de gaine peuvent soit être éliminés simplement par des méthodes adaptées bien connues de l'homme de l'art (par exemple en insérant la fibre dans un liquide d'indice supérieur à celui de la gaine), soit être utilisés pour visualiser la diffusion résultante de la lumière dans la gaine plastique de protection de la fibre ou dans tout autre enrobage sensible à une sollicitation lumineuse. Dans ce dernier cas, les zones spécifiques servent de capteurs ou de détecteurs.

Les applications d'une fibre optique du type de la fibre 800 peuvent donc être multiples.

Dans une première application, on peut utiliser une fibre multimode du type de la fibre 800 avec une zone spécifique 801A en entrée (indice du coeur de la zone spécifique supérieur à celui du coeur de la zone normale), la zone normale 801B constituant en fait le milieu de transmission normal du signal de communication. La présence de la zone spécifique 801A en entrée permet d'augmenter la puissance lumineuse injectée. Ceci permet d'améliorer le couplage avec une source lumineuse émettant avec un angle très important. On évite ainsi d'avoir à employer une source plus directive mais plus onéreuse.

D'autre part, l'augmentation de la puissance lumineuse injectée permet, dans le cas des lignes utilisées pour la détection, d'obtenir en réponse un signal de puissance plus élevée, ce signal de réponse étant fonction de la puissance injectée.

Dans une deuxième application possible, on utilise les modes de gaine au lieu de les éliminer : on visualise les rayons lumineux des modes d'ordre élevé diffusés à travers la gaine plastique de protection de la fibre ou à travers tout autre enrobage équivalent.

La visualisation de ces rayons permet par exemple d'indiquer que l'angle d'injection du signal lumineux en entrée dépasse une certaine valeur, ce type de détection pouvant servir notamment dans le cadre de la surveillance de dispositifs tournants associés à une source d'émission lumineuse en relation avec une ligne optique de détection. Ainsi, lorsque le dispositif tournant est victime d'une anomalie, on s'arrange pour que l'angle d'injection du signal lumineux dans la ligne de détection soit modifié, de manière à provoquer une éjection des modes d'ordre élevé après la transition entre zone normale et zone spécifique. La détection de la diffusion de ces modes d'ordre élevé dans la gaine de protection plastique de la fibre par exemple permet d'indiquer l'existence d'une anomalie et éventuellement de la localiser.

Par ailleurs, on peut encore utiliser une fibre du type de la fibre 800 comme moyen de signalisation lumineuse : les rayons lumineux diffusés dans la gaine et dus aux modes d'ordre élevé rendent la fibre lumineuse en certains endroits que l'on peut disposer de manière adéquate pour obtenir la signalisation souhaitée.

La disposition de la ou des zones spécifiques le long de la fibre est fonction de l'appareil dans lequel elle est utilisée, de l'atténuation de la fibre et de la quantité de signal régulièrement éjectée.

En pratique, la variation d'indice, ou une quelconque variation de composition, entre zone spécifique et normale, n'est pas brutale mais progressive. L'augmentation et la diminution d'indice se font progressivement, ce qui permet notamment d'éjecter régulièrement une partie des rayons lumineux.

Les pertes optiques dues à la transition entre la zone spécifique 801A et la zone normale 801B sont négligeables et correspondent uniquement aux pertes par réflexion entre deux milieux d'indices différents, hormis les pertes en ligne dues à la diminution d'ouverture numérique entre les zones 801A et 801B.

Dans l'exemple donné précédemment pour les valeurs de ces indices, ces pertes peuvent être estimées à 0,001% ($5.10^{-6}$ dB) de la puissance incidente dans la fibre, alors qu'elles s'élèveraient à environ 2% (0,1 dB) si la transition était effectuée par l'intermédiaire d'un connecteur optique ou d'une soudure entre deux fibres de natures différentes.

Dans le cas par exemple de verres fluorés de type ZBLAN, on peut aisément faire varier l'indice de réfraction autour de la valeur 1,5 lors de la fabrication du barreau de coeur ou du ou des tubes de gaine selon le procédé décrit en relation avec les figures 1 à 7. Ainsi, pour augmenter l'indice de réfraction, on peut ajouter du fluorure de plomb ($PbF_2$) ou retirer du fluorure de sodium (NaF). Pour diminuer l'indice de réfraction, on peut remplacer $ZrF_4$ par du fluorure d'hafnium ($HfF_4$), augmenter la proportion en NaF ou encore ajouter du fluorure de lithium (LiF). Etant donné que le fait de modifier la composition du verre de base peut entraîner des modifications des propriétés physiques du verre initial (notamment sa température de transition vitreuse), il peut en outre être nécessaire d'ajouter d'autres fluorures tels que le fluorure d'indium ($InF_3$) ou le fluorure d'yttrium ($YF_3$) aux compositions du type précédent de manière à conserver ces propriétés physiques.

On peut encore envisager le même type d'applications que celles qui viennent d'être décrites en augmentant localement l'indice du verre de gaine au lieu de diminuer celui du verre de coeur. Ceci conduit également à diminuer l'ouverture numérique en entrée de la fibre.

On pourra ainsi choisir entre les alternatives précédentes (augmentation de l'indice du verre de gaine ou diminution de l'indice du verre de coeur) en fonction des composants des verres constituant la gaine et le coeur, les variations dans les proportions de ces composants devant permettre de conserver des verres chimiquement stables et en même temps d'obtenir les variations d'indice souhaitées.

Une autre alternative possible, toujours dans le même cadre, peut être de faire varier simultanément l'indice du verre de coeur et celui du verre de gaine.

## Exemple 2

En figure 9, on voit une portion de fibre optique 900 dont le coeur est référencé 901 et une gaine optique, dite gaine optique intérieure, 902. La fibre 900 comporte en outre une gaine optique dite extérieure 903. Cette dernière gaine optique 903 peut être par exemple rapportée en utilisant un deuxième tube élaboré selon le procédé de l'invention. Ici encore, on n'a pas représenté la gaine de protection plastique de la fibre.

La fibre optique 900 présente une zone normale 900A, une zone spécifique 900B et une zone de transition 900C située entre les zones normale 900A et spécifique 900B.

On note $n_{cA}$ l'indice du verre de coeur dans la zone normale 900A et $n_{cB}$ le même indice dans la zone spécifique 900B. De même, on note $n_{gA}$ l'indice du verre de la gaine intérieure 902 dans la zone normale 900A et $n_{gB}$ l'indice du verre de gaine dans la zone spécifique 900B. Enfin, on note $n_{gext}$ l'indice du verre de la gaine extérieure 903.

Dans un exemple possible de réalisation, les indices $n_{cA}$ et $n_{cB}$ sont tous deux égaux à 1,5, l'indice $n_{gA}$ est égal à 1,495, l'indice $n_{gB}$ à 1,5 et l'indice $n_{gext}$ à 1,495.

Dans la zone de transition 900C, l'indice de la gaine intérieure 902 augmente progressivement entre la zone normale 900A et la zone spécifique 900B, de la valeur 1,495 à la valeur 1,5. En pratique, dans la majorité des fibres selon l'invention les transitions entre zones normales et spécifiques se font par variation progressive de la composition de la poudre, ce qui entraîne une variation progressive des propriétés optiques de la fibre entre zones normales et spécifiques. Une zone de transition telle que la zone 900C existe donc pratiquement toujours.

Dans la zone spécifique 900B, le diamètre effectif de coeur est égal au diamètre de la gaine intérieure 902. Pour continuer à confiner les rayons lumineux dans le coeur après la zone de transition 900C, il est nécessaire d'utiliser la gaine extérieure 903, dont l'indice est inférieur à celui du "nouveau coeur" de diamètre augmenté.

Ainsi, grâce à l'invention, on peut faire varier, lorsque cela est nécessaire, le diamètre du coeur d'une fibre optique, sans avoir à connecter ou à souder entre elles plusieurs fibres ayant des coeurs de diamètres différents.

Dans le cas où l'on souhaite conserver le caractère monomode de la fibre 900, il faut prendre garde, lorsque l'on augmente le diamètre du coeur, à ne pas trop augmenter la longueur d'onde de coupure monomode $\lambda_c$ ($\lambda_c$ représente la longueur d'onde au-dessus de laquelle la propagation dans la fibre est monomode), définie par la formule générale suivante :

$$\lambda_c \approx \frac{2\,\pi a \sqrt{2\,n_c \Delta n}}{2,405},$$

où :

- a est le rayon du coeur,
- $n_c$ l'indice du verre de coeur,
- $\Delta n$ la différence d'indice entre verre de coeur et verre de gaine.

D'après la formule précédente, l'augmentation du diamètre du coeur, et donc de a, sans modification de $n_c$ et de $\Delta n$, entraîne une augmentation, en général non souhaitée, de $\lambda_c$. Afin d'éviter cet inconvénient dans l'exemple représenté en figure 9, il suffit par exemple de choisir l'indice $n_{gext}$ de manière à maintenir $\lambda_c$ constante alors que a augmente.

Des fibres du type de la fibre 900 peuvent être utilisées dans de nombreuses applications.

Dans un premier type d'applications, il est possible d'envisager l'utilisation de ces fibres, mono ou multimodes comme capteurs.

D'une manière générale, on peut effectuer à l'aide de fibres optiques la détection de la présence de gaz ou de liquides, pour prévenir de l'éventualité d'un danger ou réguler un procédé. Cette détection est fondée sur le principe de la spectroscopie d'onde évanescente, qui nécessite l'emploi de fibres ayant une gaine optique d'épaisseur faible devant le diamètre de leur coeur.

Les fibres multimodes possèdent en général une gaine optique de faible épaisseur devant le diamètre de leur coeur. Ainsi, les ondes évanescentes qui sont véhiculées par la gaine interagissent avec le milieu environnant la fibre, rendant possible la détection par spectroscopie d'onde évanescente. Habituellement, des portions de ces fibres servant de capteurs sont insérées sur une ligne optique de détection, aux endroits où l'on souhaite effectuer la mesure ou la détection.

On peut utiliser également des fibres monomodes dont la gaine optique a été usinée afin de réduire son épaisseur au niveau des zones où l'on souhaite utiliser la fibre comme capteur. De telles fibres sont connues sous le nom de fibres D, du fait de la forme de leur section obtenue après usinage. Cet usinage est particulièrement long à effectuer, et de ce fait n'est pas envisageable sur de grandes distances.

Au lieu de cela, on peut utiliser une fibre du type de la fibre 900 selon l'invention, dans laquelle les zones normales destinées à la propagation du signal lumineux de détection sont par exemple monomodes, et les zones spécifiques multimodes. Au sein de ces zones spécifiques, l'indice de la gaine intérieure a été rendu égal à celui du coeur par addition de certains constituants adaptés lors de la fabrication du tube de préforme correspondant selon le procédé décrit précédemment.

Il peut être préférable de n'assurer qu'une propagation multimode au sein de la zone spécifique. En effet, si l'on souhaitait conserver une propagation monomode, compte tenu de l'augmentation du diamètre du coeur et de l'exigence selon laquelle la différence d'indice entre le coeur et la gaine extérieure doit être inférieure à un seuil maximal afin qu'un guidage monomode puisse être maintenu dans le coeur, il faudrait que le diamètre de la fibre elle-même soit faible, pour obtenir une épaisseur de verre de gaine assez fine pour être adaptée à la détection désirée. La fibre pourrait alors être trop fragile.

L'utilisation d'une fibre selon l'invention permet d'éviter d'une part les inconvénients du raccordement d'une portion de fibre servant de capteur à divers endroits le long de la ligne de détection, et d'autre part d'avoir à effectuer un usinage long fragilisant la fibre optique.

Par conséquent, grâce à une fibre du type de la fibre 900 selon l'invention, on peut faire varier l'épaisseur relative de la gaine sur des longueurs importantes sans grandes difficultés à l'aide du procédé précédemment décrit, et on peut également disposer en différents endroits des zones spécifiques servant de capteurs sans accroître de manière significative la durée de mise en oeuvre ni l'atténuation le long de la ligne optique.

L'utilisation de fibres du type de la fibre 900, notamment en verre fluoré, est particulièrement intéressante lorsque l'on cherche à détecter la présence de molécules absorbantes dans l'infrarouge. Les fibres en verre fluoré sont utilisables en spectroscopie d'ondes évanescentes entre 2 et 4,6 μm dans l'infrarouge. Dans cet intervalle de longueurs d'ondes, les molécules à détecter possèdent des modes de vibration fondamentaux très souvent intenses. Par exemple, le méthane possède des bandes d'absorption très intenses vers 2,4 et 3,4 μm. Ainsi, la sensibilité du verre fluoré à du méthane contenu en proportions infimes (par exemple 5%) dans le milieu environnant la fibre optique est très importante de sorte que la détection par spectroscopie d'onde évanescente est possible dans un milieu donné. On peut donc utiliser une fibre du type de la fibre 900 par exemple dans le domaine du stockage ou du transport du méthane, ou encore dans les mines, 5% étant la proportion maximale tolérable de méthane pour considérer qu'un risque d'explosion n'existe pas.

Les fibres en verre fluoré peuvent par ailleurs détecter de nombreuses autres espèces spécifiques dans l'infrarouge, comme par exemple le dioxyde de carbone ($CO_2$ vers 2,7 et 4,2 μm), les ions hydroxyles ($OH^-$ vers 2,9 μm), certains gaz anesthésiants, l'oxygène ($O_2$), etc...

Dans un deuxième type d'application, une fibre du type de la fibre 900, monomode ou multimode, peut être utilisée pour servir d'intermédiaire de raccordement entre deux fibres optiques ayant des coeurs de diamètres différents : il n'y a pas alors réellement dans la fibre utilisée de zone spécifique et de zone normale, mais plutôt deux zones ayant des diamètres de coeurs différents, l'un de ces diamètres étant par exemple égal au diamètre du coeur de l'une des fibres optiques à raccorder, et l'autre diamètre étant alors égal au diamètre du coeur de la deuxième fibre optique à raccorder.

### Exemple 3

En figure 10, on voit une portion d'une fibre optique monomode 1000 selon l'invention, constituée d'un coeur 1001 et d'une gaine 1002. Le coeur 1001 comporte plusieurs zones spécifiques 1001A disposées de manière régulière ou non entre des zones normales 1001B.

Les zones normales 1001B sont constituées de verre fluoré, et les zones spécifiques 1001A sont constituées du même verre fluoré dopé par exemple au moyen d'ions praséodyme $Pr^{3+}$. Il est bien connu d'utiliser des fibres de verre fluoré à coeur dopé au moyen d'ions praséodyme comme amplificateurs optiques aux longueurs d'ondes comprises entre 1,3 et 1,4 μm, ces amplificateurs optiques étant habituellement raccordés aux fibres d'une ligne de communication optique.

Pour réaliser une préforme correspondant à une fibre telle que la fibre 1000, il suffit d'ajouter au verre fluoré de base des terres rares adaptées sur une longueur déterminée de la préforme, c'est-à-dire pendant une durée déterminée du procédé de fabrication, puisque connaissant la vitesse de translation du piédestal, on peut en déduire la durée nécessaire pour obtenir la variation de composition souhaitée sur une longueur préétablie de la préforme, cette longueur correspondant à une longueur de zone spécifique au sein de la fibre puisque cette dernière est homothétique de la préforme.

Dans la fibre 1000 selon l'invention, au lieu de raccorder des portions de fibres servant d'amplificateurs optiques, des zones spécifiques 1001A dopées sont obtenues selon le procédé décrit précédemment, de sorte qu'aucun raccordement long et susceptible d'entraîner une augmentation de l'atténuation de la ligne n'est nécessaire.

Pour provoquer l'effet d'amplification d'un signal lumineux de longueur d'onde comprise entre 1,3 et 1,4 μm, on effectue un pompage optique de la zone spécifique 1001A au moyen d'une diode laser (non représentée) émettant par exemple au voisinage de 1 μm. Ceci permet d'obtenir des gains de puissance de l'ordre de 30 dB.

Le signal lumineux ainsi amplifié est propagé dans la fibre 1000 au sein de la zone normale 1001B suivant la zone spécifique 1001A où a été effectué le pompage. En principe, la longueur de la zone normale 1001B est supérieure à celle de la zone spécifique 1001A.

Les zones normales 1001B peuvent être constituées simplement du verre fluoré de base (leur atténuation est dans ce cas de l'ordre de 0,3 dB/km à 1,3 μm), ou bien être faiblement dopées au moyen d'ions praséodyme, la concentration en ions $Pr^{3+}$ augmentant régulièrement le long des zones spécifiques 1001A, ce qui permet de compenser les pertes intrinsèques à la fibre. Dans ce dernier cas, il n'est pas nécessaire d'obtenir en sortie des zones spécifiques 1001A un facteur d'amplification très élevé, puisque les zones normales 1001B peuvent elles-mêmes compenser en partie la diminution de gain. Le fait d'avoir un gain d'amplification moins élevé permet d'utiliser des lasers de pompe de puissance plus faible, et donc de réaliser une économie dans le coût des matériels utilisés et une diminution de l'encombrement des systèmes.

Grâce à l'invention, il est également possible de ne pas introduire dans toutes les zones spécifiques 1001A la même concentration de dopant. Par exemple, on peut disposer à l'extrémité de sortie de la fibre 1000 une zone spécifique 1001A contenant une concentration en ions praséodyme plus élevée que celle des autres zones spécifiques 1001A. En effectuant alors un pompage à partir de la sortie, on amplifie le signal propagé, ce qui permet d'obtenir un signal plus intense en sortie. Le fait d'amplifier le signal en sortie au lieu de le détecter directement, d'une part ne pose pas de problème au niveau de la ligne puisque la zone spécifique d'extrémité peut être obtenue de la même manière que les autres zones spécifiques 1001A lors de l'élaboration de la préforme de la fibre, et d'autre part permet d'utiliser aux deux extrémités de la fibre des composants de sensibilité moyenne et donc peu onéreux.

Bien entendu, le dopage effectué peut être un dopage quelconque, selon l'application de la fibre.

On peut par exemple utiliser des ions erbium ($Er^{3+}$) pour effectuer l'amplification aux longueurs d'onde comprises entre 1,5 et 1,6 $\mu$m.

On peut également effectuer des co-dopages tels que par exemple $Pr^{3+}/Yb^{3+}$ ou $Er^{3+}/Pr^{3+}$ pour améliorer l'efficacité de l'amplification.

En pratique, dans le procédé décrit précédemment, l'ajout de terres rares sous forme de fluorures ($PrF_3$, $ErF_3$, $YbF_3$) dans un verre fluoré de base ne pose aucun problème.

Par ailleurs, il est possible de produire au sein de la fibre, par dopage, non seulement des effets amplificateurs mais également des effets lasers et des conversions de fréquences.

En outre, le dopage des verres multicomposants, quels qu'ils soient, au moyen d'ions de terres rares telles que le terbium $Tb^{3+}$, le dysprosium $Dy^{3+}$, l'holmium $Ho^{3+}$, l'erbium $Er^{3+}$, le néodyme $Nd^{3+}$ et le praséodyme Pr3+, confère à ces verres des constantes de Verdet élevées (de l'ordre de 20 à 60 rad/T.m), ce qui permet d'observer au sein des fibres obtenues un effet Faraday important lorsqu'un rayon lumineux polarisé traverse le verre : il y a rotation de la polarisation de la lumière sous l'effet d'un champ magnétique extérieur.

On peut ainsi utiliser par exemple les ions de Terbium $Tb^{3+}$ pour doper le coeur des fibres de manière à obtenir des fibres servant d'isolateurs optiques (rotation de 45° de la polarisation). Les ions $Dy^{3+}$, $Ho^{3+}$, $Er^{3+}$, $Nd^{3+}$, $Pr^{3+}$ peuvent être utilisés également dans le même but. Les isolateurs optiques sont habituellement, de même que les amplificateurs optiques, raccordés aux fibres d'une ligne de communication optique. Ils permettent d'éviter la propagation d'un signal lumineux parasite vers la partie arrière de la ligne, afin de préserver les performances de cette dernière.

Grâce à l'invention, si une ou plusieurs zones spécifiques du type de la zone 1001A sont dopées de cette manière, on obtient, en plaçant autour des zones spécifiques des aimants et éventuellement en enroulant la zone spécifique sur elle-même au niveau de chaque aimant, des isolateurs optiques en ligne. Aucune opération de raccordement des isolateurs optiques n'est nécessaire, et l'augmentation résultante de l'atténuation provient en partie de la réflexion entre deux milieux de composition différente, et pas de pertes dues au couplage de deux fibres optiques.

Du fait de sa sensibilité au champ magnétique, grâce aux zones spécifiques dopées tel qu'indiqué ci-dessus, une fibre telle que la fibre 1000, de préférence à maintien de polarisation, comportant une ou plusieurs zones spécifiques 1001A, peut servir de détecteur à distance de champs magnétiques fortement perturbateurs dont on souhaite connaître l'existence éventuelle : on mesure la rotation de la polarisation de la lumière au passage des zones spécifiques dopées.

Une autre application possible pour une fibre telle que la fibre 1000 est la détection de champs magnétiques de faible intensité. Pour cela, au niveau des zones spécifiques 1001A, lors de l'élaboration d'une préforme selon l'invention, on insère un matériau magnétostrictif (par exemple, dans le cas du verre fluoré, du nickel, un fluorure mixte ferro ou ferrimagnétique, un alliage magnétique adapté), ce matériau étant choisi pour réagir de manière limitée avec la souche en fusion. Sous l'effet d'un champ magnétique, par déformation de ce matériau dispersé inclus dans la matrice vitreuse, une contrainte apparaît dans la fibre, ce qui se traduit par une augmentation de l'atténuation du signal lumineux traversant la zone spécifique concernée.

Dans l'art antérieur, de tels capteurs sont obtenus en utilisant un tube, en nickel par exemple, mis en contact avec une fibre optique sur une portion de cette dernière servant de capteur. La possibilité, selon l'invention, de réaliser un ou plusieurs capteurs intrinsèques à la fibre permet d'assurer la détection sur de grandes distances, sans avoir à effectuer une préparation longue et fastidieuse.

Selon une autre application, la fibre 1000 dont certaines des zones spécifiques 1001A ou toutes ces dernières sont dopées au moyen de terres rares peut également servir de capteur de température. En effet, certains ions de terres rares, lorsqu'il sont soumis à une excitation lumineuse intense, ont la propriété d'émettre de la lumière par fluorescence à une fréquence plus élevée que celle de la lumière d'origine. Ce phénomène est dénommé "fluorescence excitée par conversion de fréquence".

Lorsqu'un tel phénomène se produit dans une fibre, une partie de l'énergie émise est rétrodiffusée vers l'entrée de la fibre et peut donc être détectée. Or l'intensité de la fluorescence varie en fonction de la température du milieu environnant : ce phénomène permet donc de mesurer cette température.

Dans l'art antérieur, on utilise des fibres multimodes pour une telle application (elles permettent d'injecter une plus grande puissance lumineuse au départ). Ces fibres comportent, tous les 5 mètres par exemple, une portion de fibre rapportée et dopée de manière adéquate pour servir de capteur de température. Une telle ligne de détection est nécessairement longue à réaliser, et l'on comprend bien que les pertes par couplage sont élevées. L'invention permet de pallier ces deux inconvénients.

Lorsque les zones spécifiques d'une fibre selon l'invention sont utilisées comme capteurs, la mesure de l'effet produit peut être effectuée par une mesure de transmission optique de la fibre ou par réflectométrie. La quantification et la localisation de l'effet produit sont déterminées respectivement par l'amplitude et la position d'une atténuation supplémentaire observée, ou de toute autre variation des caractéristiques du signal lumineux transmis.

D'une manière générale, dans l'art antérieur, l'insertion au sein d'une fibre optique classique de portions de fibres destinées à servir de capteurs par raccordement des extrémités de ces portions à la ligne de détection entraîne des pertes optiques supplémentaires de l'ordre de 2 à 20% (0,1 à 1 dB) et nécessite en général un temps d'installation de l'ordre de quelques heures (y compris la validation du capteur).

Grâce à l'invention, les pertes ne s'élèvent qu'à environ 0,001% et on effectue un gain net sur le temps d'installation.

Bien évidemment, l'invention n'est pas limitée au mode de réalisation qui vient d'être décrit.

En premier lieu, le procédé décrit concerne des fibres dont le verre de base est un verre fluoré, mais il est bien évident que tout autre verre multicomposants peut être employé, comme par exemple un verre d'oxydes à base de silice.

Il est d'autre part possible de réaliser au sein d'une même fibre plusieurs zones spécifiques de compositions différentes, et ainsi de disposer de capteurs réagissant à des phénomènes extérieurs différents sur une seule et même fibre.

Lorsque l'on ajoute ou que l'on retire des constituants pour réaliser les zones spécifiques dans une préforme selon l'invention, on observe en pratique sur la fibre obtenue une variation progressive de la concentration de ces constituants dans les zones spécifiques, et non pas des variations brutales, ainsi qu'il a déjà été précisé plus haut. Ces variations progressives de concentration (qui sont à l'origine de variations progressives des propriétés optiques de la fibre, par exemple de son indice) peuvent être mises à profit par exemple pour compenser l'atténuation du signal lumineux le long de la zone spécifique, lorsque la réponse de la fibre est proportionnelle à la concentration en constituant ajouté ou retiré et à la puissance du signal incident : ainsi, la sensibilité de la zone spécifique est pratiquement constante sur toute sa longueur.

Ces variations progressives permettent également de localiser précisément l'endroit où se produit un événement à détecter : en fonction de l'ampleur de la réponse de la fibre, on peut situer le long de la zone spécifique l'origine de cette réponse.

Etant donné que, dans certains cas, du fait du procédé de fabrication choisi, la longueur de la zone spécifique peut être importante, il sera souvent intéressant, lorsque les zones spécifiques servent de capteurs, d'enrouler la fibre sur elle-même de manière à constituer une spire au niveau de chaque zone spécifique : ceci accroît la sensibilité du capteur constitué par la zone spécifique et permet de le localiser précisément.

## Revendications

1. Procédé de fabrication d'une pièce cylindrique sous forme de tube et/ou de barreau constituée d'un verre multicomposants, ledit procédé comportant les opérations suivantes :

   - l'on met en oeuvre une cavité cylindrique verticale (1) tapissée de membranes poreuses (2, 3), dont les dimensions internes sont supérieures de quelques dizaines de microns à celles de ladite pièce, et dans laquelle est susceptible de coulisser un piédestal cylindrique (5) constituant un support pour ladite pièce,
   - on prévoit sur ledit piédestal (5) une souche originelle (11) constituée dudit verre,
   - on chauffe ladite souche (11) jusqu'à la fusion et on injecte un gaz en permanence dans lesdites membranes poreuses (2, 3) pour maintenir entre elles et ladite souche en fusion une couche de gaz de quelques dizaines de microns d'épaisseur évitant ainsi tout contact,
   - on alimente ladite souche à l'état fondu par le haut de ladite cavité (30) par une distribution continue d'une poudre des constituants dudit verre dont on fait varier la composition au fur et à mesure de la formation de ladite pièce cylindrique, de sorte que ledit verre constituant ladite pièce cylindrique a une composition longitudinalement variable,
   - on descend ledit piédestal (5) au fur et à mesure de la formation de ladite pièce cylindrique à partir de ladite souche.

2. Procédé selon la revendication 1 caractérisé en ce que l'on fait varier la composition de ladite poudre de constituants dudit verre par ajout d'un ou de plusieurs constituants à une poudre de constituants de base à des instants prédéterminés pendant le déroulement dudit procédé.

3. Procédé selon l'une des revendications 1 ou 2 caractérisé en ce que ladite poudre des constituants dudit verre est amenée par des moyens d'amenée (30) ayant une direction rectiligne et orientés vers le haut de ladite cavité.

4. Procédé selon l'une des revendications 1 ou 2 caractérisé en ce que ladite poudre des constituants dudit verre est amenée par des moyens d'amenée ayant une forme hélicoïdale et orientés vers le haut de ladite cavité.

**5.** Procédé selon l'une des revendications 1 à 4 caractérisé en ce que :

- ledit piédestal (5) a lui-même la forme d'un corps cylindrique creux (6) fermé à sa partie inférieure par un piston (7),
- ledit piédestal (5) contient initialement une charge solide en verre destinée à former ladite souche originelle (11),
- on extrait progressivement dudit piédestal (7) ladite souche à l'état fondu en poussant ledit piston (7) vers le haut.

**6.** Procédé selon l'une des revendications 1 à 5 caractérisé par le fait que ledit piédestal (5) coulisse dans ladite cavité (1) avec une couche de gaz intermédiaire.

**7.** Procédé selon l'une des revendications 1 à 6 caractérisé par le fait que la pression de gaz dans lesdites membranes poreuses est régulée de manière à maintenir dans ladite cavité à l'état stationnaire une colonne de verre fondu stable et de hauteur constante.

**8.** Procédé selon l'une des revendications 1 à 7 caractérisé par le fait que ladite pièce en formation est surmontée d'une colonne de verre fondu, l'interface à la température de transition vitreuse étant située au niveau de la base desdites membranes.

**9.** Procédé selon l'une des revendications 1 à 8 caractérisé en ce que lesdites membranes poreuses sont réalisées en graphite de perméabilité DARCY de l'ordre de $10^{-15}$ $m^2$.

**10.** Procédé selon la revendication 9 caractérisé en ce que lesdites membranes poreuses sont recouvertes d'une couche mince de pyrocarbone.

**11.** Procédé selon l'une des revendications 1 à 10 caractérisé en ce que toutes les faces dudit piédestal sont recouvertes d'une couche mince de pyrocarbone.

**12.** Procédé selon l'une des revendications 5 à 11 caractérisé en ce que ledit piston est recouvert d'une couche de pyrocarbone.

**13.** Procédé selon l'une des revendications 1 à 12 caractérisé en ce que :

- ladite pièce cylindrique est un tube,
- ladite cavité est tubulaire et tapissée de membranes poreuses coaxiales,
- ledit piédestal est annulaire.

**14.** Procédé selon la revendication 13 caractérisé par le fait que lesdites membranes ont même épaisseur et que les pressions appliquées sur les faces interne et externe du tube en formation sont égales.

**15.** Procédé selon l'une des revendications 1 ou 2 caractérisé en ce que :

- ladite pièce cylindrique est un barreau,
- ladite cavité est tubulaire et creuse,
- ledit piédestal est tubulaire.

**16.** Fibre optique multimode obtenue par étirage d'une préforme constituée d'un barreau de coeur entouré d'au moins un tube de gaine obtenus par le procédé selon l'une des revendications 1 à 15, et comportant un coeur entouré d'au moins une gaine optique, ledit coeur et ladite gaine étant de composition variable longitudinalement le long de ladite fibre et présentant des zones dites normales, au sein desquelles les compositions dudit verre de coeur et dudit verre de gaine sont appelées compositions de base, et des zones dites spécifiques au sein desquelles la composition dudit verre de coeur et/ou la composition dudit verre de gaine est différente de la ou desdites compositions de base, l'ouverture numérique desdites zones spécifiques étant supérieure à l'ouverture numérique desdites zones normales, **caractérisée en ce qu'**elle comporte au moins une zone spécifique située à l'une de ses extrémités servant d'extrémité d'entrée d'un signal lumineux, ladite zone spécifique étant destinée à assurer une réfraction dans ladite gaine de la plupart des modes d'ordre élevé.

**17.** Fibre optique obtenue par étirage d'une préforme constituée d'un barreau de coeur entouré d'au moins un tube de gaine obtenus par le procédé selon l'une des revendications 1 à 15, et comportant un coeur entouré d'au moins une gaine optique, ledit coeur et ladite gaine étant de composition variable longitudinalement le long de ladite fibre et présentant des zones dites normales, au sein desquelles les compositions dudit verre de coeur et dudit verre de gaine sont appelées compositions de base, et des zones dites spécifiques au sein desquelles la composition dudit verre de coeur et/ou la composition dudit verre de gaine est différente de la ou desdites compositions de base, **caractérisée en ce qu'**elle comporte une gaine, dite gaine supplémentaire, entourant ladite gaine, et en ce que :

- la gaine de l'une ou de plusieurs desdites zones spécifiques contient des éléments dopants tels que son indice de réfraction est égal à celui dudit coeur de ladite zone spécifique,
- le coeur de l'une ou de plusieurs desdites zones spécifiques a un indice de réfraction identique à celui du coeur desdites zones normales,

- ladite gaine supplémentaire a un indice de réfraction inférieur à celui de ladite gaine dans les zones spécifiques.

18. Fibre optique selon la revendication 17 caractérisée en ce que la propagation au sein desdites zones normales est monomode, et en ce que la propagation au sein desdites zones spécifiques est multimode.

19. Fibre optique obtenue par étirage d'une préforme constituée d'un barreau de coeur entouré d'au moins un tube de gaine obtenus par le procédé selon l'une des revendications 1 à 15, et comportant un coeur entouré d'au moins une gaine optique, ledit coeur et ladite gaine étant de composition variable longitudinalement le long de ladite fibre et présentant des zones dites normales, au sein desquelles les compositions dudit verre de coeur et dudit verre de gaine sont appelées compositions de base, et des zones dites spécifiques au sein desquelles la composition dudit verre de coeur et/ou la composition dudit verre de gaine est différente de la ou desdites compositions de base, **caractérisée en ce que** le coeur desdites zones spécifiques contient des ions de terres rares.

20. Fibre optique selon la revendication 19 caractérisée en ce que le coeur d'au moins l'une desdites zones normales contient une ou plusieurs terres rares.

21. Fibre optique obtenue par étirage d'une préforme constituée d'un barreau de coeur entouré d'au moins un tube de gaine obtenus par le procédé selon l'une des revendications 1 à 15, et comportant un coeur entouré d'au moins une gaine optique, ledit coeur et ladite gaine étant de composition variable longitudinalement le long de ladite fibre et présentant des zones dites normales, au sein desquelles les compositions dudit verre de coeur et dudit verre de gaine sont appelées compositions de base, et des zones dites spécifiques au sein desquelles la composition dudit verre de coeur et/ou la composition dudit verre de gaine est différente de la ou desdites compositions de base, **caractérisée en ce que** le coeur et/ou la gaine desdites zones spécifiques contient une dispersion de particules d'un matériau ayant des propriétés magnétostrictrices.

22. Application d'une fibre optique multimode selon la revendication 16 caractérisée en ce que ladite fibre est utilisée dans une ligne de détection, lesdites zones spécifiques servant de capteurs par visualisation des modes d'ordre élevé réfractés dans ladite gaine et diffusés par ladite gaine.

23. Application d'une fibre optique selon l'une des revendications 17 ou 18 caractérisée en ce que lesdites zones spécifiques sont utilisées comme capteurs.

24. Application d'une fibre optique selon la revendication 17 caractérisée en ce que ladite fibre est utilisée comme intermédiaire de raccordement entre deux fibres optiques ayant des diamètres de coeur différents.

25. Application d'une fibre selon l'une des revendications 19 ou 20 caractérisée en ce que lesdites zones spécifiques servent à amplifier un signal optique transmis par lesdites zones normales.

26. Application d'une fibre optique selon l'une des revendications 19 ou 20 caractérisée en ce que lesdites zones spécifiques sont utilisées comme isolateurs optiques.

27. Application d'une fibre optique selon l'une des revendications 19 ou 20 caractérisée en ce que lesdites zones spécifiques sont utilisées comme capteurs de température ou de champ magnétique.

28. Application d'une fibre optique selon la revendication 21 caractérisée en ce que ladite fibre est une fibre à maintien de polarisation, et en ce que lesdites zones spécifiques sont utilisées comme capteurs de champ magnétique.

**Claims**

1. Method of manufacturing a multi-component glass cylindrical part in the form of a tube and/or rod, said method comprising the following operations:

   use is made of a vertical cylindrical cavity (1) lined with porous membranes (2, 3) whose inside dimensions are a few tens of microns larger than said part and in which can slide a cylindrical pedestal (5) constituting a support for said part,
   a seed mass (11) of said glass is provided on said pedestal (5),
   said seed mass (11) is heated until it melts and a gas is injected continuously into said porous membranes (2, 3) to maintain between them and said molten seed mass a layer of gas a few tens of microns thick preventing any contact between them,
   said molten seed mass is fed from the top (30) of said cavity by continuously dispensing a powder made up of the constituents of said glass, and the composition of the powder is varied as said cylindrical part is formed, so that said glass constituting said cylindrical part has a composition that varies in the longitudinal direction,

said pedestal (5) is lowered as said cylindrical part is formed from said seed mass.

2. Method according to claim 1 characterized in that the composition of said powder made up of the constituents of said glass is varied by adding one or more constituents to a powder made up of parent constituents at predetermined times during the execution of said method.

3. Method according to claim 1 or claim 2 characterized in that said powder made up of the constituents of said glass is fed by straight feed means (30) oriented towards the top of said cavity.

4. Method according to claim 1 or claim 2 characterized in that said powder made up of the constituents of said glass is fed by helical feed means oriented towards the top of said cavity.

5. Method according to any one of claims 1 to 4 characterized in that:

said pedestal (5) is a hollow cylindrical body (6) closed at the bottom by a piston (7),

said pedestal (5) initially contains a solid charge of glass adapted to form said seed mass (11),

said seed mass is extracted gradually from said pedestal (5) in the molten state by pushing up said piston (7).

6. Method according to any one of claims 1 to 5 characterized in that said pedestal (5) slides in said cavity (1) with an intermediary layer of gas.

7. Method according to any one of claims 1 to 6 characterized in that the gas pressure in said porous membranes is regulated to maintain in said cavity under steady state conditions a stable column of molten glass of constant height.

8. Method according to any one of claims 1 to 7 characterized in that said part being formed is surmounted by a column of molten glass and the interface at the glass transition temperature is level with the bottom of said membranes.

9. Method according to any one of claims 1 to 8 characterized in that said porous membranes are made of graphite with a DARCY permeability in the order of $10^{-15}$ m$^2$.

10. Method according to claim 9 characterized in that said porous membranes are covered with a thin layer of pyrolytic carbon.

11. Method according to any one of claims 1 to 10 characterized in that all sides of said pedestal are covered with a thin layer of pyrolytic carbon.

12. Method according to any one of claims 5 to 11 characterized in that said piston is covered with a layer of pyrolytic carbon.

13. Method according to any one of claims 1 to 12 characterized in that:

said cylindrical part is a tube,

said cavity is tubular and lined with coaxial porous membranes,

said pedestal is annular.

14. Method according to claim 13 characterized in that said membranes have the same thickness and equal pressures are applied to the inside and outside of the tube being formed.

15. Method according to claim 1 or claim 2 characterized in that:

said cylindrical part is a rod,

said cavity is tubular and hollow,

said pedestal is tubular.

16. Multimode optical fiber manufactured by drawing a preform comprising a core rod surrounded by at least one cladding tube made by the method according to any one of claims 1 to 15 and including a core surrounded by at least one optical cladding, said core and said cladding being of composition that varies longitudinally along said fiber and having normal areas in which the compositions of said core glass and said cladding glass are called parent compositions and special areas in which the composition of said core glass and/or the composition of said cladding glass is different from said parent composition(s), the numerical aperture of said special areas being greater than the numerical aperture of said normal areas, the fiber being characterized in that it includes at least one special area situated at one of its ends serving as the entry end for a light signal, said special area being designed to ensure that most of the higher order modes are refracted in said cladding.

17. Optical fiber manufactured by drawing a preform comprising a core rod surrounded by at least one cladding tube made by the method according to any one of claims 1 to 15 and including a core surrounded by at least one optical cladding, said core and said cladding being of composition that varies longitudinally along said fiber and having normal areas in which the compositions of said core glass and said cladding glass are called parent compositions and special areas in which the composition of said core glass and/or the composition of said cladding glass is different from said parent composition(s), the fiber being characterized in that it includes a supplementary cladding around said cladding and in that:

the cladding of at least one of said special areas contains dopants such that its refractive index is equal to that of said core of said special area,
the core of at least one of said special areas has the same refractive index as the core of said normal areas,
said supplementary cladding has a refractive index lower than that of said cladding in the special areas.

18. Optical fiber according to claim 17 characterized in that propagation in said normal areas is monomode and propagation in said special areas is multimode.

19. Optical fiber manufactured by drawing a preform comprising a core rod surrounded by at least one cladding tube made by the method according to any one of claims 1 to 15 and including a core surrounded by at least one optical cladding, said core and said cladding being of composition that varies longitudinally along said fiber and having normal areas in which the compositions of said core glass and said cladding glass are called parent compositions and special areas in which the composition of said core glass and/or the composition of said cladding glass is different from said parent composition(s), the fiber being characterized in that the core of said special area contains rare earth ions.

20. Fiber according to claim 19 characterized in that the core of at least one normal area contains at least one rare earth.

21. Optical fiber manufactured by drawing a preform comprising a core rod surrounded by at least one cladding tube made by the method according to any one of claims 1 to 15 and including a core surrounded by at least one optical cladding, said core and said cladding being of composition that varies longitudinally along said fiber and having normal areas in which the compositions of said core glass and said cladding glass are called parent compositions and special areas in which the composition of said core glass and/or the composition of said cladding glass is different from said parent composition(s), characterized in that the core and/or the cladding of said special area contain dispersed particles of a magnetostrictive material.

22. Application of a multimode optical fiber according to claim 16 characterized in that said fiber is used in a sensing line and said special areas act as sensors by making visible higher order modes refracted into said cladding and diffused by said cladding.

23. Application of a fiber according to claim 17 or claim 18 characterized in that said special areas are used as sensors.

24. Application of an optical fiber according to claim 17 characterized in that said fiber is used as a means of interconnecting two optical fibers having different core diameters.

25. Application of a fiber according to claim 19 or claim 20 characterized in that said special areas are used to amplify an optical signal transmitted by said normal areas.

26. Application of an optical fiber according to claim 19 or claim 20 characterized in that said special areas are used as optical isolators.

27. Application of an optical fiber according to claim 19 or claim 20 characterized in that said special areas are used as temperature or magnetic field sensors.

28. Application of an optical fiber according to claim 21 characterized in that said fiber is a maintained polarization fiber and said special areas are used as magnetic field sensors.

**Patentansprüche**

1. Verfahren zur Herstellung eines zylindrischen Körpers aus Multikomponentenglas in Form eines Rohres und/oder eines Stabes, wobei dieses Verfahren die folgenden Arbeitsgänge umfaßt:

- man verwendet einen vertikalen zylindrischen Hohlraum (1), der mit porösen Membranen (2, 3) ausgekleidet ist, dessen Innenabmessungen um einige Zehn Mikrometer größer sind als die des Körpers und in dem ein zylindrischer Sockel (5) verschiebbar ist, der einen Träger für den Körper bildet,
- man sieht auf dem Sockel (5) einen Anfangsstumpf (11) vor, der aus dem besagten Glas besteht,
- man erhitzt diesen Stumpf (11) bis zur Schmelze und man leitet permanent ein Gas in die porösen Membranen (2, 3), um zwischen diesen und dem schmelzflüssigen Stumpf eine Gasschicht von einigen Zehn Mikrometer Dicke aufrechtzuerhalten und so jeglichen Kontakt zu vermeiden,
- man beschickt den Stumpf in geschmolzenem Zustand von der Oberseite des Hohlraums her (30) durch eine kontinuierliche Abgabe eines Pulvers aus den Bestandteilen des Glases, dessen Zusammensetzung man entsprechend der Bildung des zylindrischen Körpers verändert, so daß das Glas, das diesen zylindrischen Körper bildet, eine longitudinal veränderliche Zusammensetzung besitzt,

- man senkt den Sockel (5) entsprechend der von dem Stumpf ausgehenden Bildung des zylindrischen Körpers.

2. Verfahren nach Anspruch 1, dadurch gekennzeichnet, daß man die Zusammensetzung des Pulvers der Glasbestandteile verändert, indem man zu bestimmten Zeitpunkten während des Verfahrensablaufs einen oder mehrere Bestandteile zu einem Pulver von Grundbestandteilen hinzufügt.

3. Verfahren nach einem der Ansprüche 1 oder 2, dadurch gekennzeichnet, daß das Pulver der Glasbestandteile durch Zufuhrmittel (30) zugeführt wird, die eine geradlinige Richtung haben und auf die Oberseite des Hohlraumes gerichtet sind.

4. Verfahren nach einem der Ansprüche 1 oder 2, dadurch gekennzeichnet, daß das Pulver der Glasbestandteile durch Zufuhrmittel zugeführt wird, die spiralförmig sind und auf die Oberseite des Hohlraumes gerichtet sind.

5. Verfahren nach einem der Ansprüche 1 bis 4, dadurch gekennzeichnet, daß:

- der Sockel (5) seinerseits die Form eines zylindrischen Hohlkörpers (6) besitzt, der an seinem unteren Teil durch einen Kolben (7) verschlossen wird,
- der Sockel (5) anfänglich eine feste Glascharge enthält, die dazu bestimmt ist, den Anfangsstumpf (11) zu bilden,
- man nach und nach den Stumpf im geschmolzenen Zustand aus dem Sockel (7) befördert, indem man den Kolben (7) nach oben schiebt.

6. Verfahren nach einem der Ansprüche 1 bis 5, dadurch gekennzeichnet, daß der Sockel (5) mit einer Gaszwischenschicht in dem Hohlraum (1) gleitet.

7. Verfahren nach einem der Ansprüche 1 bis 6, dadurch gekennzeichnet, daß der Gasdruck in den porösen Membranen so eingestellt wird, daß in dem Hohlraum im stationären Zustand eine stabile Säule aus geschmolzenem Glas von konstanter Höhe aufrechterhalten wird.

8. Verfahren nach einem der Ansprüche 1 bis 7, dadurch gekennzeichnet, daß sich auf dem entstehenden Körper eine Säule aus geschmolzenem Glas erhebt, wobei sich die Grenzfläche zur Glasübergangstemperatur in Höhe der Basis der Membranen befindet.

9. Verfahren nach einem der Ansprüche 1 bis 8, dadurch gekennzeichnet, daß die porösen Membranen aus Graphit mit einer DARCY-Permeabilität in der Größenordnung von $10^{-15}$ m$^2$ gefertigt sind.

10. Verfahren nach Anspruch 9, dadurch gekennzeichnet, daß die porösen Membranen mit einer dünnen Schicht Pyrokohlenstoff überzogen sind.

11. Verfahren nach einem der Ansprüche 1 bis 10, dadurch gekennzeichnet, daß alle Flächen des Sockels mit einer dünnen Schicht Pyrokohlenstoff überzogen sind.

12. Verfahren nach einem der Ansprüche 5 bis 11, dadurch gekennzeichnet, daß der Kolben mit einer Schicht Pyrokohlenstoff überzogen ist.

13. Verfahren nach einem der Ansprüche 1 bis 12, dadurch gekennzeichnet, daß:

- der zylindrische Körper ein Rohr ist,
- der Hohlraum röhrenförmig ist und mit koaxialen porösen Membranen ausgekleidet ist,
- der Sockel ringförmig ist.

14. Verfahren nach Anspruch 13, dadurch gekennzeichnet, daß die Membranen dieselbe Dicke besitzen und daß die auf die Innen- und Außenflächen des entstehenden Rohres ausgeübten Drücke gleich sind.

15. Verfahren nach einem der Ansprüche 1 oder 2, dadurch gekennzeichnet, daß:

- der zylindrische Körper ein Stab ist,
- der Hohlraum röhrenförmig und hohl ist,
- der Sockel röhrenförmig ist.

16. Multimode-Lichtleitfaser, die durch Ziehen einer Vorform erhalten wurde, die aus einem Kernstab besteht, der von mindestens einem Mantelrohr umgeben ist, welche mittels des Verfahrens nach einem der Ansprüche 1 bis 15 erzeugt wurden, und einen Kern umfaßt, der von mindestens einem optischen Mantel umgeben ist, wobei der Kern und der Mantel längs der Faser von longitudinal veränderlicher Zusammensetzung sind und sogenannte normale Zonen, innerhalb deren die Zusammensetzungen des Kernglases und des Mantelglases als Grundzusammensetzungen bezeichnet werden, und sogenannte spezifische Zonen aufweisen, innerhalb deren sich die Zusammensetzung des Kernglases und/oder die Zusammensetzung des Mantelglases von der oder den Grundzusammensetzungen unterscheidet, wobei die numerische Apertur der spezifischen Zonen größer ist als die numerische Apertur der normalen Zonen, **dadurch gekennzeichnet, daß** sie mindestens eine spezifische Zone aufweist, die sich an einem ihrer Enden befindet, das als Eingangsende für ein Lichtsignal dient, wobei die spezifische Zone dazu bestimmt ist, eine Brechung der meisten Moden höherer Ordnung in dem Mantel zu gewährleisten.

17. Lichtleitfaser, die durch Ziehen einer Vorform erhalten wurde, die aus einem Kernstab besteht, der von mindestens einem Mantelrohr umgeben ist, welche mittels des Verfahrens nach einem der Ansprüche 1 bis 15 erzeugt wurden, und einen Kern umfaßt, der von mindestens einem optischen Mantel umgeben ist, wobei der Kern und der Mantel längs der Faser von longitudinal veränderlicher Zusammensetzung sind und sogenannte normale Zonen, innerhalb deren die Zusammensetzungen des Kernglases und des Mantelglases als Grundzusammensetzungen bezeichnet werden, und sogenannte spezifische Zonen aufweisen, innerhalb deren sich die Zusammensetzung des Kernglases und/oder die Zusammensetzung des Mantelglases von der oder den Grundzusammensetzungen unterscheidet, **dadurch gekennzeichnet, daß** sie einen sogenannten zusätzlichen Mantel aufweist, der den Mantel umgibt, und daß:

- der Mantel einer oder mehrerer dieser spezifischen Zonen solche Dotierungssubstanzen enthält, daß seine Brechzahl der des Kerns der spezifischen Zone entspricht,
- der Kern einer oder mehrerer dieser spezifischen Zonen eine Brechzahl besitzt, die mit der des Kerns der normalen Zonen identisch ist
- der zusätzliche Mantel eine Brechzahl besitzt, die kleiner als die des Mantels in den spezifischen Zonen ist.

18. Lichtleitfaser nach Anspruch 17, dadurch gekennzeichnet, daß die Fortpflanzung innerhalb der normalen Zonen einmodig ist und daß die Fortpflanzung innerhalb der spezifischen Zonen mehrmodig ist.

19. Lichtleitfaser, die durch Ziehen einer Vorform erhalten wurde, die aus einem Kernstab besteht, der von mindestens einem Mantelrohr umgeben ist, welche mittels des Verfahrens nach einem der Ansprüche 1 bis 15 erzeugt wurden, und einen Kern umfaßt, der von mindestens einem optischen Mantel umgeben ist, wobei der Kern und der Mantel längs der Faser von longitudinal veränderlicher Zusammensetzung sind und sogenannte normale Zonen, innerhalb deren die Zusammensetzungen des Kernglases und des Mantelglases als Grundzusammensetzungen bezeichnet werden, und sogenannte spezifische Zonen aufweisen, innerhalb deren sich die Zusammensetzung des Kernglases und/oder die Zusammensetzung des Mantelglases von der oder den Grundzusammensetzungen unterscheidet, **dadurch gekennzeichnet, daß** der Kern der spezifischen Zonen Ionen seltener Erden enthält.

20. Lichtleitfaser nach Anspruch 19, dadurch gekennzeichnet, daß der Kern mindestens einer der normalen Zonen eine oder mehrere seltene Erden enthält.

21. Lichtleitfaser, die durch Ziehen einer Vorform erhalten wurde, die aus einem Kernstab besteht, der von mindestens einem Mantelrohr umgeben ist, welche mittels des Verfahrens nach einem der Ansprüche 1 bis 15 erzeugt wurden, und einen Kern umfaßt, der von mindestens einem optischen Mantel umgeben ist, wobei der Kern und der Mantel längs der Faser von longitudinal veränderlicher Zusammensetzung sind und sogenannte normale Zonen, innerhalb deren die Zusammensetzungen des Kernglases und des Mantelglases als Grundzusammensetzungen bezeichnet werden, und sogenannte spezifische Zonen aufweisen, innerhalb deren sich die Zusammensetzung des Kernglases und/oder die Zusammensetzung des Mantelglases von der oder den Grundzusammensetzungen unterscheidet, **dadurch gekennzeichnet, daß** der Kern und/oder der Mantel der spezifischen Zonen eine Dispersion von Teilchen eines Materials mit magnetostriktiven Eigenschaften enthält.

22. Anwendung einer Multimode-Lichtleitfaser nach Anspruch 16, dadurch gekennzeichnet, daß die Faser in einer Detektionsleitung verwendet wird, wobei die spezifischen Zonen durch Sichtbarmachung der Moden höherer Ordnung, die in dem Mantel gebrochen und durch den Mantel gestreut werden, als Sensoren dienen.

23. Anwendung einer Lichtleitfaser nach einem der Ansprüche 17 oder 18, dadurch gekennzeichnet, daß die spezifischen Zonen als Sensoren verwendet werden.

24. Anwendung einer Lichtleitfaser nach Anspruch 17, dadurch gekennzeichnet, daß die Faser als Verbindungszwischenstück zwischen zwei Lichtleitfasern mit verschiedenen Kerndurchmessern verwendet wird.

25. Anwendung einer Lichtleitfaser nach einem der Ansprüche 19 oder 20, dadurch gekennzeichnet, daß die spezifischen Zonen zur Verstärkung eines durch die normalen Zonen übertragenen optischen Signals dienen.

26. Anwendung einer Lichtleitfaser nach einem der Ansprüche 19 oder 20, dadurch gekennzeichnet, daß die spezifischen Zonen als optische Isolatoren verwendet werden.

27. Anwendung einer Lichtleitfaser nach einem der Ansprüche 19 oder 20, dadurch gekennzeichnet, daß die spezifischen Zonen als Temperatur- oder Magnetfeldsensoren verwendet werden.

28. Anwendung einer Lichtleitfaser nach Anspruch 21, dadurch gekennzeichnet, daß die Faser eine Faser mit gleichbleibender Polarisation ist und daß die spezifischen Zonen als Magnetfeldsensoren verwendet werden.

# FIG. 1

# FIG. 2

# FIG. 3

# FIG. 4

# FIG. 5

# FIG. 6

750-800°C    61

270°C    62
           60
           50

# FIG.7

## FIG. 8

801A      801B   802     800

801

## FIG. 9

900A      900C       900B      900

901   902       903

## FIG. 10

1002    1001B    1001A    1001B    1001A    1001B     1000

1001

# FIG. 11